# EUROPÄISCHE PATENTSCHRIFT

(11) **EP 1 100 636 B1**
(45) Veröffentlichungstag und Bekanntmachung des Hinweises auf die Patenterteilung: **16.07.2003**
(21) Anmeldenummer: 00936663.4
(22) Anmeldetag: 03.05.2000
(51) Int. Cl.: B21C 37/00, B23K 33/00, B64C 1/12

(54) **METALLISCHES SCHALENBAUTEIL**
METALLIC SHELL COMPONENT
PIECE METALLIQUE EN FORME DE COQUE

(30) Priorität: 31.05.1999 DE 19924909
(43) Veröffentlichungstag der Anmeldung: 23.05.2001
(73) Patentinhaber: EADS Deutschland GmbH, 85521 Ottobrunn (DE)
(72) Erfinder: PALM, Frank, D-81825 München (DE)
(86) Internationale Anmeldenummer: DE0001388
(87) Internationale Veröffentlichungsnummer: WO00072990

(56) Entgegenhaltungen:
- CH-A- 224 693
- DE-A- 4 446 320
- DE-C- 19 639 667

## Beschreibung

Die Erfindung betrifft ein metallisches Schalenbauteil mit integrierten Versteifungsprofilen gemäß dem Oberbegriff des Patenanspruchs 1, insbesondere ein Hautblech mit Stringern für Luftfahrzeuge.

Üblicherweise werden Flugzeugrümpfe aus zusammengenieteten Hautblechen hergestellt, die aus Aluminium-Legierungen bestehen. Bei dem Entwurf der Flugzeugrümpfe sind vorgegebene Festigkeitsanforderungen zu erfüllen, wozu neben der statischen und der Dauerfestigkeit auch die Erfüllung eines Rißfortschritts- und Restfestigkeitsverhalten zählt. Die Erfüllung der vorgenannten Anforderungen spiegeln sich im Entwurf der Flugzeugrümpfe wieder; so findet man deshalb in den Schalenbauteilen der Außenhaut die Bauweise von Hautblechen mit aufgenieteten Stringern. Diese Bauweise dient vor allem dem hohen Anspruch an die Steifigkeit der Rumpfröhre.

Im Falle einer Rißbeschädigung des Hautbleches, mit einer angenommenen Rißausbreitung in Umfangsrichtung des Flugzeugrumpfes, vergrößert sich der Riß unter Betriebsbelastungen und trifft dabei auf einen Stringer. Wenn dieser aber durch eine Nietung oder Klebung an das Hautblech angebunden ist, kann der Riß üblicherweise unter dem Stringer hindurchwandern, ohne diesen dabei zu beschädigen. Die Beeinträchtigung der Restfestigkeit der Gesamtstruktur ist somit relativ gering und ein Versagen der Konstruktion nicht zu befürchten.

Um Fertigungs- und Betriebskosten zu sparen gibt es Bestrebungen, die Nietung der Stringer durch eine Schweißverbindung zu ersetzen (DE 196 39 667 C1). Dabei ist zu beobachten, daß ein quer zu einem aufgeschweißten Stringer luftretender Riß sich gleichermaßen im Hautblech und im Stringer ausbreiten kann und folglich den Stringer stark an- oder sogar durchreißt. Die Rißfortschritts- und die Restfestigkeit eines dermaßen geschädigten Schalenbauteiles sind deshalb schlechter als die eines genieteten Schalenbauteiles. Außerdem entstehen beim Schweißen der üblichen Stringer mittels des dafür verwendeten Laserstrahlschweißens immer wieder Risse in den Schweißnähten, deren Entstehung auf eine Behinderung der Schrumpfung beim Erkalten der Schweißnaht zurückzuführen ist. Der Einsatz von Schweißzusatzwerkstoffen zur Verbesserung der Erstarrungsbedingungen kann diesen Nachteil nur teilweise kompensieren.

Aufgabe der Erfindung ist es, ein kostengünstiges metallisches Schalenbauteil mit integrierten Versteifungsprofilen zu schaffen, das neben der erforderlichen Steifigkeit auch ein ausreichendes Rißfortschritts- und Restfestigkeitsverhalten aufweist.

Diese Aufgabe wird erfindungsgemäß durch die Merkmale des Patentanspruchs 1 gelöst. Weiterbildungen der Erfindung sind in den Unteransprüchen angegeben.

Die Erfindung verwendet vorteilhaft eine geometriebedingte, örtliche Verringerung von mechanischen Spannungsbelastungen in der Spitze eines in ein Versteifungsprofil des Schalenbauteiles eindringenden Risses und zum anderen die Kenntnis, daß zur Erreichung des erforderlichen Steifigkeitsverhaltens die Kräfte, die bei aufgenieteten Stringern von der Stringernietung aufgenommen werden müssen, relativ gering sind. Oft ist eine einfache Nietreihe für die Stringerbefestigung ausreichend. Bei aufgeschweißten Versteifungsprofilen kann deshalb die Schweißnahttiefe verringert werden. Dadurch wird das Schrumpfen verbessert und eine Verringerung der Heißrißbildung erreicht.

Eine geringere Schweißnahttiefe hat den zusätzlichen Vorteil, daß eine höhere Schweißgeschwindigkeit erreichbar ist, wodurch der von der Schweißtemperatur herrührende Erwärmungsverzug der Schalenbauteile verringert wird.

Anhand der Zeichnung werden nachfolgend Ausführungsbeispiele der Erfindung näher erläutert.
Fig. 1 zeigt einen Ausschnitt eines Schalenbauteiles mit einem aufgeschweißten Versteifungsprofil, das im Fußbereich eine größere Profildicke aufweist,
Fig.2 zeigt einen Ausschnitt eines Schalenbauteiles mit einem aufgeschweißten Versteifungsprofil, das im Fußbereich eine größere Profildicke und eine reduzierte Anbindungsdicke aufweist,
Fig.3 zeigt einen Ausschnitt eines Schalenbauteiles mit einem aufgeschweißten Versteifungsprofil, das im Fußbereich eine größere Profildicke und eine reduzierte Anbindungsdicke sowie zusätzlich eine Einkerbung aufweist und
Fig.4 zeigt einen Ausschnitt eines Schalenbauteiles, das als Strangpressprofil hergestellt ist.

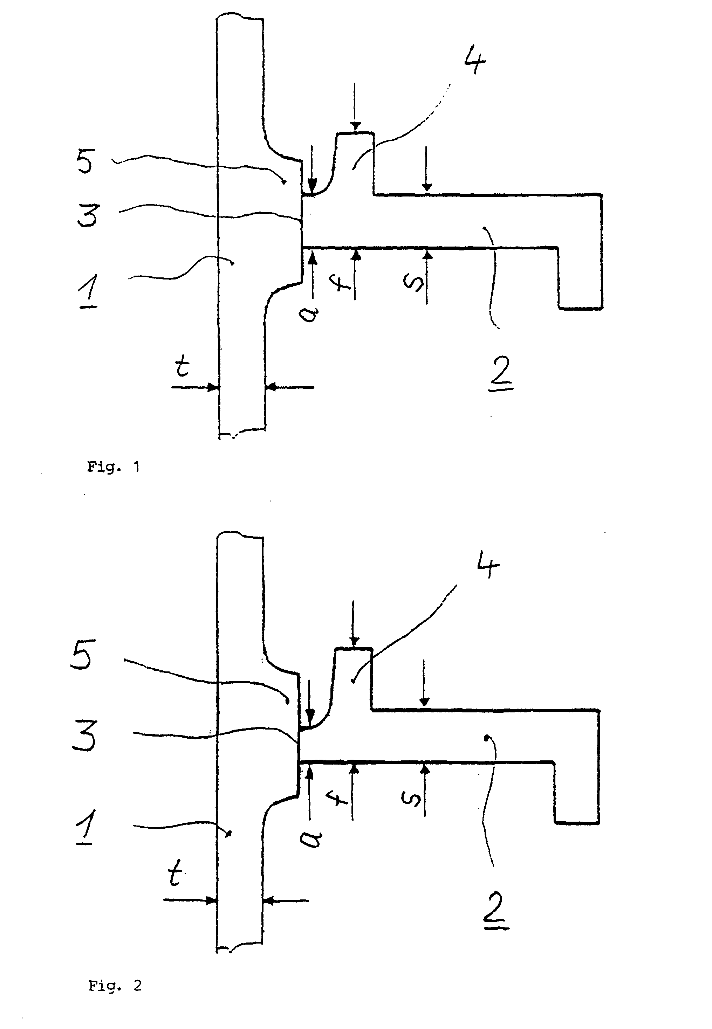

Das in Fig. 1 gezeigte Schalenbauteil für einen Flugzeugrumpf besteht aus dem Hautblech 1 und aufgeschweißten, zueinander beabstandeten Versteifungsprofilen 2. In dem aus zeichnerischen Gründen gezeigten Ausschnitt des Schalen-bauteiles ist in Fig. 1 nur eines von mehreren Versteifungsprofilen erkennbar.

Bei dem gezeigten Ausführungsbeispiel bestehen das Hautblech 1 und die Versteifungsprofile 2 aus einer AlMgSiCu-Legierung; die erfindungsgemäße Lösung ist jedoch auch auf andere metallische Werkstoffe verwendbar. Die Versteifungsprofile 2 sind in dem Ausführungsbeispiel als Stringer ausgebildet; die Erfindung kann aber auf beliebig andere Versteifungsprofile angewendet werden, die einer aus einem Hautblech herrührenden Rißbelastung ausgesetzt sein können.

Die Hautblechdicke t und die Profildicke s sind in dem gezeigten Ausführungsbeispiel in ihren Abmessungen weitgehend gleich und betragen beispielsweise etwa 1,6 bis 2 mm. Die Versteifungsprofile 2 sind mittels C02-Laserstrahl-schweißen auf dem Hautblech 1 aufgeschweißt, wobei mit zwei Strahlquellen von beiden Seiten der Anbindungsstelle 3 unter einem sehr flachen Winkel unter Verwendung von Schweißzusatzdraht geschweißt wird. Bei der hier erfolgenden kompletten Durchschweißung der Anbindungsstelle 3 ergibt sich für jeden Laserstrahl eine minimale Einschweißtiefe von 1 mm, womit eine Schweißgeschwindigkeit zwischen 6 bis 10m/min möglich wird. Bei steigender Laserleistung kann die Schweißgeschwindigkeit sogar größer als 10m/min sein.

Zur Behinderung einer vom Hautblech 1 ausgehenden Rißausbreitung im Versteifungsprofil 2 weisen diese erfindungsgemäß in ihrem Fußbereich eine Aufdickung 3 auf. Durch die Aufdickung 3 wird das Verhältnis aus Anbindungsdicke a zu Profilfußdicke f verschoben, so daß die Spannungsintensität zum Rißfortschritt und folglich die Rißfortschrittsgeschwindigkeit im Versteifungsprofil 2 möglichst niedrig liegt. Das Verhältnis f/a soll dabei größer oder gleich 2 sein, damit der Rißfortschritt stark verlangsamt wird oder der Riß in die Profil-Längsrichtung abgelenkt wird.

Im Ausführungsbeispiel wird das Hautblech 1 als gewalztes Blech mit den angestrebeten Endabmessungen zum Schweißen vorbereitet. Dabei wird mittels "chemischen Fräsen" an den Stellen an denen die Versteifungsprofile 2 aufgeschweißt werden sollen, ein Sockel 5 erzeugt. Der Grund hierfür ist darin zu sehen, daß die Wärmeeinflußzone, welche nach dem Schweißen durch metallurgische Vorgänge irreversibel im Hautblech zurückbleibt, bei einer Verwendung des Schalenbauteiles im Flugzeugbau aus Festigkeitsvorgaben nicht in die nominale Hautblechdicke t hineinreichen darf.

Die erfindungsgemäße Lösung ist nicht auf die in Fig. 1 gezeigte Ausbildung der Aufdickung 3 beschränkt. Die in Fig. 1 gezeigte Ausbildung entspricht einer vorteilhaft herstellbaren Z-Form an. Die Aufdickung 3 könnte beispielsweise den Fußschenkel des Versteifungsprofiles 2 aber auch symmetrisch aufweiten.

Eine weitere unterstützende Maßnahme zur Unterdrückung einer Rißausbreitung in das Versteifungsprofil (2) hinein wird erfindungsgemäß dadurch erreicht, daß auch das Verhältnis der Profilfußdicke (f) zur Hautblechdicke (t) größer oder gleich 2 ausgelegt ist, wodurch ebenfalls das Verhältnis der Spannungsintensitäten beeinflußt wird.

Das in Fig.2 gezeigte Ausführungsbeispiel entspricht dem vorangehend zu Fig.1 beschriebenen Ausführungsbeispiel, weist aber demgegenüber eine reduzierte Anbindungsdicke a auf. Im vorangehend beschriebenen Ausführungsbeispiel entsprach die Anbindungsdicke a der Profildicke s. Eine Reduzierung der Anbindungsdicke a kann aufgrund der geringen Belastungen der Schweißnaht problemlos ausgeführt werden. Eine Halbierung oder Drittelung der Anbindungsdicke kann ohne Erzeugung einer zu hohen Linienspannung vorgenommen werden. Diese Reduzierung hat einen mehrfach positiven Effekt; neben einer Verstärkung der schon vorangehend beschriebenen Reduktion des Rißfortschrittes bzw. der Erzeugung einer Rißablenkung treten wegen der hier geringeren Schweißnahttiefe weniger Schrumpfspannungen beim Erstarren der Schweißnaht und folglich weniger Heißrisse auf. Die Schweißnahttiefe der voll durchschweißten Anbindungsstelle 3 reduziert sich mit der Anbindungsdicke a. Außerdem sind bei einer geringeren Schweißnahttiefe größere Schweißgeschwindigkeiten möglich.

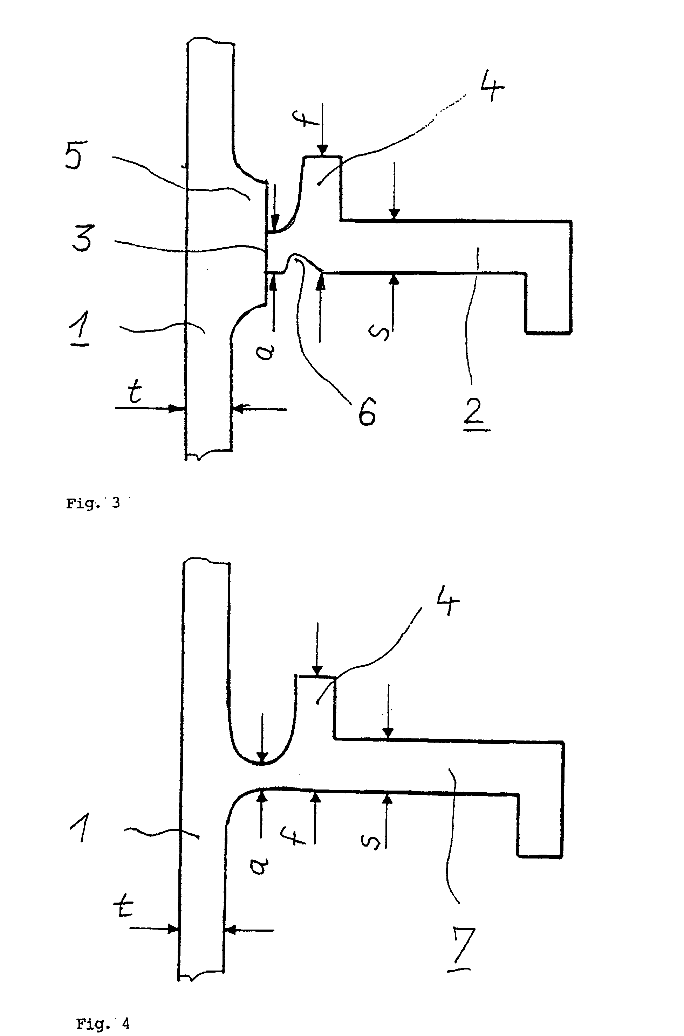

Fig.3 zeigt ein Ausführungsbeispiel, das dem in Fig.2 beschriebenen Ausführungsbeispiel entspricht, zusätzlich im Bereich des Profilfußes noch eine Einkerbung 6 zur weiteren Verringerung der Steifigkeit des Versteifungsprofiles 2 im Bereich der Anbindungsstelle 3 aufweist. Dadurch bringt der Profilfuß den Schrumpfkräften während des Schweißens weniger Widerstand entgegen und es reduziert sich die Gefahr der Heißrißbildung.

Die Einkerbung 6 kann für ein Einseitenschweißen - wie in Fig.3. gezeigt - nur auf einer Seite oder für ein beidseitiges Schweißen auf beiden Seiten des Profilfußes ausgebildet sein.

Die voranstehend beschriebene Maßnahme der Ausbildung von Einkerbungen zur Verringerung der Steifigkeit des Profilfußes ist auch auf das Ausführungsbeispiel gemäß Fig. 1 anwendbar, in dem die Anbindungsdicke a nicht gegenüber der Profildicke s reduziert ist.

Neben der Ausbildung einer Einkerbung kann der erwünschte Effekt auch durch das Einbringen von lokalen Druckspannungen erreicht werden. Dazu wird anstelle einer Einkerbung durch Walzen oder Rollen eine Verdichtungskerbe erzeugt. Die damit im Profilfuß generierten Druckeigenspannungen heben sich gegen die während des Schweißens auftretenden Zugschrumpfspannungen auf und reduzieren so die Gefahr von Heißrissen.

Das in Fig.4 gezeigte Schalenbauteil ist abweichend von den voranstehend beschriebenen Ausführungsbeispielen nicht durch Schweißen hergestellt, sondern durch Strangpressen eines monolithischen Bauteiles bestehend aus Hautblech und Versteifungsprofilen. Diese Herstellungsweise verursacht weniger Aufwand, als die Herstellung mit aufgeschweißten Versteifungsprofilen. Die Probleme hinsichtlich des strukturellen Verhaltens - insbesondere der Restfestigkeit im beschädigten Zustand - sind mit denen von geschweißten Schalenbauteilen gleichzusetzen. Demzufolge können die vorangehend zu Fig. 1 und Fig.2 vorgestellten Lösungsmerkmale der Optimierung des Verhältnisses von Profilfußdicke f zu Anbindungsdicke a auch auf die Gestaltung eines derartigen Schalenbauteiles übertragen werden. Der in Fig.4 gezeigte Ausschnitt eines Ausführungsbeispieles zeigt ein hinsichtlich des Rißfortschrittsverhaltens optimiertes Strangpressprofil 7 mit der Ausbildung einer Aufdickung 4 im Versteifungsprofil. Entscheidend für das Rißfortschrittsverhalten ist wiederum das Verhältnis von Anbindungsdicke a zu Profilfußdicke f.

Die Herstellung eines kompletten Schalenbauteiles durch ein großes Strangpressprofil ist zwar technisch möglich, bereitet aber insbesondere bei kleinen Hautblechdicken t Fertigungsprobleme bezüglich der Einhaltung von Maßtoleranzen und der Vermeidung von Oberflächenfehlern. Einfacher ist es, schmale Strangpressprofile mit beispielsweise 3 oder 4 Stringern abzupressen und diese dann mittels Stumpfstoßschweißungen oder Nieten zu kompletten Schalenbauteilen zu vereinen. Das Stumpfstoßschweißen kann als Lichtbogen-, Laser-, Elektronenstrahl- oder als Reib-Rührschweißen ausgeführt sein.

Alternativ zur Verwendung von Strangpressprofilen 7 lassen sich kleine Schalenbauteile mit wenigen Versteifungsprofilen (2) auch aus dem Vollen fräsen und dann zu einem größeren Schalenbauteil zusammenschweißen oder -nieten.

## Patentansprüche

1. Metallisches Schalenbauteil bestehend aus einem Hautblech (1) und Versteifungsprofilen (2), **dadurch gekennzeichnet, daß** die Versteifungsprofile (2) im Fußbereich eine Aufdickung (4) mit einer Profilfußdicke (f) aufweisen, daß die Aufdickung (4) zur Anbindungsstelle (3) hin auf eine Anbindungsdicke (a) reduziert ist und daß das Verhältnis von Profilfußdicke (f) zu Anbindungsdicke (a) größer oder gleich 2 ist.

2. Schalenbauteil nach Anspruch 1 , **dadurch gekennzeichnet, daß** die Anbindungsdicke (a) kleiner gleich der Profildicke(s) des unverdickten Versteifungsprofiles (2) ist.

3. Schalenbauteil nach einem der Ansprüche 1 oder 2, **dadurch gekennzeichnet, daß** die Steifigkeit des Versteifungsprofiles im Bereich der Anbindungstelle (3) durch eine oder zwei gegenüberliegende Einkerbungen (6) reduziert ist.

4. Schalenbauteil nach einem der Ansprüche 1 Oder 2, **dadurch gekennzeichnet, daß** im Verteifungsprofil (2) im Bereich der Anbindungsstelle (3) durch Walzen oder Rollen eine Verdichtungskerbe erzeugt ist.

5. Schalenbauteil nach einem der Ansprüche 1 bis 4, **dadurch gekennzeichnet, daß** das Verhältnis von Profilfußdicke (f) zur Hautblechdicke (t) größer oder gleich 2 ist.

6. Schalenbauteil nach einem der Ansprüche 1 bis 5, **dadurch gekennzeichnet, daß** die Versteifungsprofile (2) auf das Hautblech (1) aufgeschweißt sind.

7. Schalenbauteil nach einem der Ansprüche 1 bis 5, **dadurch gekennzeichnet, daß** das Schalenbauteil als Strangpressprofil (7) ausgebildet ist.

8. Schalenbauteil nach einem der Ansprüche 1 bis 5, **dadurch gekennzeichnet, daß** das Schalenbauteil bestehend aus Hautblech (1) und Versteifungsprofilen (2) durch Fräsen aus dem Vollen hergestellt ist.

9. Schalenbauteil nach einem der Ansprüche 6 bis 8, **dadurch gekennzeichnet daß** das Schalenbauteil aus mehreren kleineren geschweißten Schalenbauteilen, Stranpressprofilen (7) oder gefrästen Schalenbauteilen mittels Stumpfstoßschweißen oder Nieten zu einem größeren Schalenbauteil zusammengesetzt ist.

10. Schalenbauteil nach einem der Ansprüche 1 bis 9, **dadurch gekennzeichnet, daß** das Schalenbauteil zum Aufbau eines Fluggzeugrumpfes verwendet wird, aus einer Al-Luftfahrt-Legierung hergestellt ist und die Versteifungsprofile (2) als Stringer an das Hautblech (1) angebunden sind.

## Claims

1. A metallic shell component consisting of a skin plate (1) and stiffening profiles (2), **characterised in that** the stiffening profiles (2) have in the base region a thickening (4) with a profile base thickness (f), **in that** the thickening (4) is reduced towards the connection point (3) to a connection thickness (a), and **in that** the ratio of the profile base thickness (f) to the connection thickness (a) is greater than or equal to 2.

2. A shell component according to Claim 1, **characterised in that** the connection thickness (a) is less than or equal to the profile thickness (s) of the non-thickened stiffening profile (2).

3. A shell component according to one of Claims 1 or 2, **characterised in that** the rigidity of the stiffening profile in the region of the connection point (3) is reduced by means of one or two opposite indentations (6).

4. A shell component according to one of Claims 1 or 2, **characterised in that** a thickening indent is produced in the stiffening profile (2) in the region of the connection point (3) by milling or rolling.

5. A shell component according to one of Claims 1 to 4, **characterised in that** the ratio of the profile base thickness (f) to the skin plate thickness (t) is greater than or equal to 2.

6. A shell component according to one of Claims 1 to 5, **characterised in that** the stiffening profiles (2) are welded onto the skin plate (1).

7. A shell component according to one of Claims 1 to 5, **characterised in that** the shell component is an extruded profile (7).

8. A shell component according to one of Claims 1 to 5, **characterised in that** the shell component consisting of the skin plate (1) and the stiffening profiles (2) is produced by cutting from a solid piece.

9. A shell component according to one of Claims 6 to 8, **characterised in that** the shell component is assembled from several smaller welded shell components, extruded profiles (7) or cut shell components by means of butt joint welding or riveting to form a larger shell component.

10. A shell component according to one of Claims 1 to 9, **characterised in that** the shell component is used for constructing an aeroplane fuselage, is manufactured from an aluminium aircraft alloy, and the stiffening profiles (2) are connected to the skin plate (1) as stringers.

## Revendications

1. Composant mince métallique constitué d'une tôle fine (1) et de profilés de renforcement (2),
**caractérisé en ce que**
les profilés de renforcement (2) présentent, dans la zone du pied, une surépaisseur (4) ayant une épaisseur (f) de pied du profilé, que la surépaisseur (4) se réduit, en allant vers le point d'attache (3), à une épaisseur d'attache (a), et que le rapport entre épaisseur (f) de pied du profilé et épaisseur d'attache (a) est supérieur ou égal à 2.

2. Composant mince selon la revendication 1,
**caractérisé en ce que**
l'épaisseur d'attache (a) est inférieure ou égale à l'épaisseur (s) du profilé du profilé de renforcement (2) non épaissi.

3. Composant mince selon l'une des revendications 1 ou 2,
**caractérisé en ce que**
la rigidité du profilé de renforcement dans la zone du point d'attache (3) est réduite par une ou deux entailles (6) situées en face l'une de l'autre.

4. Composant mince selon l'une des revendications 1 ou 2,
**caractérisé en ce qu'**
une entaille par compression est produite dans le profilé de renforcement (2) dans la zone du point d'attache (3) par laminage ou roulage.

5. Composant mince selon l'une des revendications 1 à 4,
**caractérisé en ce que**
le rapport entre épaisseur (f) du pied du profilé et épaisseur (t) de la tôle fine est supérieur ou égal à 2.

6. Composant mince selon l'une des revendications 1 à 5,
**caractérisé en ce que**
les profilés de renforcement (2) sont rapportés par soudage sur la tôle fine (1).

7. Composant mince selon l'une des revendications 1 à 5,
**caractérisé en ce que**
le composant mince est réalisé en tant que profilé extrudé (7).

8. Composant mince selon l'une des revendications 1 à 5,
**caractérisé en ce que**
le composant mince constitué d'une tôle fine (1) et de profilés de renforcement (2) est réalisé par fraisage dans la totalité.

9. Composant mince selon l'une des revendications 6 à 8,
**caractérisé en ce que**
le composant mince constitué de plusieurs petits composants minces, profilés extrudés (7) ou composants minces fraisés, soudés, est assemblé en un composant mince plus grand par soudage bout à bout ou par rivets.

10. Composant mince selon l'une des revendications 1 à 9,
**caractérisé en ce que**
le composant mince est utilisé pour la structure d'un fuselage d'avion, est fabriqué en un alliage d'aluminium pour aéronautique, et les profilés de renforcement (2) sont attachés en tant que raidisseurs à la tôle fine (1).
